Europäisches Patentamt

European Patent Office

Office européen des brevets

(11) Publication number: **0 487 728 B1**

## EUROPEAN PATENT SPECIFICATION

(45) Date of publication of patent specification: **07.12.94**  (51) Int. Cl.⁵: **C04B 35/58**, C01B 21/072

(21) Application number: **90911695.6**

(22) Date of filing: **02.08.90**

(86) International application number:
**PCT/JP90/00991**

(87) International publication number:
**WO 91/01953 (21.02.91 91/05)**

(54) PROCESS FOR MANUFACTURING POWDERY ALUMINUM NITRIDE COATED ON THE SURFACE WITH OXIDE, OXYNITRIDE OR NITRIDE OF YTTRIUM.

(30) Priority: **07.08.89 JP 205501/89**

(43) Date of publication of application:
**03.06.92 Bulletin 92/23**

(45) Publication of the grant of the patent:
**07.12.94 Bulletin 94/49**

(84) Designated Contracting States:
**DE FR GB NL**

(56) References cited:
**JP-A-62 132 776**
**JP-A-62 187 172**
**JP-A-62 265 106**
**JP-A-62 297 205**

**DATABASE WPIL Week 9022, Derwent Publications Ltd., London, GB; AN 90-167384 & JP-A-2107511**

(73) Proprietor: **SUMITOMO CHEMICAL COMPANY, LIMITED**
**5-33 Kitahama 4-chome**
**Chuo-ku**
**Osaka-shi Osaka (JP)**

(72) Inventor: **MURASE, Mitsutoshi**
**5-15, Hosigoe-cho**
**Niihama-shi, Ehime 792 (JP)**
Inventor: **YAMAMOTO, Kazuo**
**5-242, Wakamizu-cho 1-chome**
**Niihama-shi, Ehime 792 (JP)**
Inventor: **TANAKA, Shinichiro**
**405, 2-13-10, Amakubo**
**Tsukuba-shi, Ibaragi 305 (JP)**
Inventor: **MURAKAMI, Hideaki**
**4-20, Hongou 1-chome**
**Niihama-shi, Ehime 792 (JP)**

DATABASE WPIL Week 8521, Derwent Publications Ltd., London, GB; AN 85-126598 & JP-A-60065768

DATABASE WPIL Week 8542, Derwent Publications Ltd., London, GB; AN 85-258942 & JP-A-60171270

(74) Representative: **Diamond, Bryan Clive et al**
**Gee & Co.**
**Chancery House**
**Chancery Lane**
**London WC2A 1QU (GB)**

**EP 0 487 728 B1**

**Description**

The present invention relates to powdery aluminum nitride having excellent thermal conductivity, a method of manufacture thereof, and an aluminum nitride molding composition containing the same.

Recently, as integration density of IC and the like becomes higher, if has become an important problem as to substrate materials to rapidly remove heat generated therein. Conventional substrate materials mainly composed of alumina are not satisfactory to meet the problem of such heat removal. Accordingly, aluminum nitride, which has higher thermal conductivity than alumina, is highlighted as a substrate material to replace the alumina, and are comprehensively being investigated.

The powdery raw material for the manufacture of the aluminum nitride substrate is produced by two processes at present.

The one is a direct nitriding process in which powdery metallic aluminum is directly reacted with nitrogen to form aluminum nitride. The other is reductive nitriding process in which powdery alumina is mixed with powdery carbon, and the mixture is allowed to react in a nitrogen-containing atmosphere.

The direct nitriding process has disadvantages such that the use of relatively coarse metallic aluminum powder in this process necessitates a step of pulverization to pulverize the nitrided product after the nitriding, which tends to cause contamination with impurity coming from a pulverizer; and the surface of the crystal structure is distorted to lower the stability against oxygen; so that a physically satisfactory sintered compact is not obtainable by use of powdery aluminum nitride produced by the process.

On the contrary, the reductive nitriding process does not require violent long-time pulverization because sufficiently fine powdery alumina can be employed as the starting material, so that products having less contamination by impurities and having satisfactory properties are readily obtainable. Accordingly the process is practically commercialized in industrial manufacture.

Regarding the reductive nitriding, for the purpose of improvement of thermal conductivity of powdery aluminum nitride and of sintering characteristics for use for sintered compacts, methods have been disclosed recently: a method wherein at least one of metals selected as a sintering auxiliary from the group consisting of alkaline earth metals, lanthanide metals, and yttrium and their compounds is mixed with powdery alumina and powdery carbon in a liquid dispersing medium, and the mixture is sintered in a nitrogen atmosphere (see for example, JP-A Sho-60-65768) (the term "JP-A" as used herein means an "unexamined published Japanese patent application".); a method wherein at least one of rare earth elements as a sintering auxiliary is dissolved into solid of powdery alumina particles or dispersed uniformly in ultra fine particles, the resulting mixture is mixed with powdery carbon and sintered in a nitrogen atmosphere (see for example, JP-A Sho-62-265106); and a method wherein the surface of aluminum nitride powder is coated with an organic compound of alkaline earth, rare earth, or the like, or a solution of an inorganic compound, and subsequently it is heat-treated (see for example, JP-A Sho-62-187172, JP-A Sho-62-248666, etc.).

In any of these methods, however, the improvement of thermal conductivity of the resulting sintered compact is still unsatisfactory, probably because the effect of the sintering auxiliary is not sufficient in the sintering.

A molding composition thus prepared comprising powdery aluminum nitride and an organic binder is also disclosed (see JP-A Sho-60-171270). The composition is disadvantageous in that it cannot readily give a sintered compact exhibiting a low degree of shrinkage and having less anisotropy (variation of sintered density), although the composition can give substrates such as a substrate for a multi-layer package and the like by molding by a press method, an extrusion method, or especially a doctor-blade method.

In view of such situation, the inventors of the present invention comprehensively investigated methods to provide a molding composition powdery aluminum nitride and a molding compound therefrom which is capable of giving an aluminum nitride compact exhibiting low degree of shrinkage and low anisotropy and has excellent thermal conductivity without decrease of sintered density in comparison with prior art, and consequently accomplished the present invention.

The present invention provides a process for manufacture of powdery aluminum nitride coated on the surface of its primary particles of agglomerated particles with at least one of oxides, oxynitrides, and nitrides of yttrium in an amount of from 0.1% to 10% by weight in terms of metal based on aluminum nitride after nitriding, the process being characterized in that alumina, which has an average primary particle diameter of not more than 5 $\mu$m and is coated with yttrium or an yttrium compound in an amount of 0.1% by weight to 10% by weight in terms of metal based on the aluminum nitride formed by nitriding, is mixed with carbon having an ash content of 0.5% or less and an average secondary particle diameter of not more than 5 $\mu$m, and the mixture is calcined in an atmosphere of nitrogen or ammonia at a temperature of 1400°C to 1700°C.

3

The present invention further provides an aluminum nitride composition comprising 0.1 to 30 parts by weight of a binder composed of organic polymer compound decomposable at a temperature of 1400°C or lower blended to 100 parts by weight of powdery aluminum nitride which is coated on the surface of its primary particles of agglomerated particles with at least one of oxides, oxynitrides, and nitrides of yttrium in an amount of from 0.1% by weight to 10% by weight in terms of metal, and the powdery aluminum nitride is produced by the process being characterized in that alumina, which has an average primary particle diameter of not more than 5 $\mu$m and is coated with yttrium or an yttrium compound in an amount of 0.1% by weight to 10% by weight in terms of metal based on the aluminum nitride formed by nitriding, is mixed with carbon having an ash content of 0.5% or less and an average secondary particle diameter of not more than 5 $\mu$m, and the mixture is calcined in an atmosphere of nitrogen or ammonia at a temperature of 1,400°C to 1,700°C".

The present invention is described in more detail below.

The powdery aluminum nitride of the present invention is constituted of agglomerated particles having an average particle diameter of about 10 $\mu$m or less, preferably about 5 $\mu$m or less formed by agglomeration of primary particles of an average particle diameter of about 2 $\mu$m or less. If the diameter of the agglomerated particles is excessively large, interior voids are not readily collapsed, so that a high green molding density and high sintered density of a molded article cannot be achieved without further treatment.

The powdery aluminum nitride of the present invention is coated on the surface of its primary particles of agglomerated particles with at least one of oxides, oxynitrides, and nitrides of yttrium (hereinafter referred to as a "sintering auxiliary" occasionally) in an amount of from about 0.1% by weight to about 10% by weight, preferably from about 0.2 to about 7% by weight in terms of metal. Less amount of coating of the sintering auxiliary than the above range is unpreferable since the thermal conductivity is not sufficiently improved, while more amount thereof is unpreferable since the thermal conductivity will be impaired.

When powdery alumina having an average primary particle diameter of 5 $\mu$m or less, preferably from 0.3 $\mu$m to 2 $\mu$m is mixed with powdery carbon having an ash content of 0.5% by weight or less and an average secondary particle diameter of 5 $\mu$m or less and is nitrided at a temperature of 1400°C to 1700°C in a nitrogen or ammonia atmosphere, the intended powdery aluminum nitride can be obtained by using powdery aluminum coated on the surface with yttrium or a metal compound thereof in an amount of from about 0.1% by weight to about 10% by weight in terms of metal based on the aluminum nitride formed by nitriding.

If the employed powdery alumina has exceedingly small diameter, the surface of the powder is not readily coated by sintering auxiliary, and the oxygen content after nitriding will increase. On the contrary, if it has an exceedingly large diameter, the nitriding reaction cannot readily proceed inconveniently.

The method for coating the sintering auxiliary of the surface of powdery alumina is not specially limited. The examples include a method wherein alumina is dispersed in water, yttrium nitrate, yttrium chloride or yttrium sulfate is gradually added dropwise thereto by keeping the pH alkaline by addition of ammonia water or caustic soda, etc. to deposit yttrium hydroxide onto the surface of alumina; and a method wherein a sintering auxiliary is dissolved in a solution, powdery alumina is dispersed and mixed, the mixture is hydrolyzed to deposit sintering auxiliary on the surface of the alumina, and the deposit is calcined as necessary.

The sintering auxiliary employed in the present invention is yttrium or its metal compound. However, another metal or metal compound may be employed combinedly within the range where the effect of the present invention is not impaired.

As such a material to be combinedly employed, calcium or a calcium compound is recommended since the combined use thereof further improves thermal conductivity. The amount of addition of such a combinedly used substance relative to yttrium depends on the added substance. Usually, the amount is within the range of from 50 to 10000 ppm in terms of metal.

Since calcium tends to volatilize during the nitriding reaction, the calcium should be added as the raw material in an amount to compensate it, or otherwise an atmosphere control should be selected so as to prevent the volatilization.

The compound for coating of the powdery alumina is of any type, insofar as it is capable of coating as a solid the surface of the alumina powder, including hydroxides, oxides, carbides, fluorides, carbonates, and so forth.

The powdery alumina coated on its surface with the sintering auxiliary is subsequently mixed with carbon.

The carbon having an average secondary particle diameter of about 5 $\mu$m or less, preferably 3 $\mu$m or less, and an ash content of 0.5% by weight or less is preferably employed usually.

4

EP 0 487 728 B1

The carbon having a particle diameter larger than the aforementioned range cannot readily undergo the reaction.

The mixing of the powdery alumina and the powdery carbon is conducted by means of such an apparatus and a method that an impurity which will remain after calcination as an impurity does not get mixed insofar as possible.

Any method, whether a wet process or a dry process, satisfying this requirement may be employed. The method include a ball mill mixing method and a mixer type mixing method.

In the mixing, the ratio of the powdery alumina to the powdery carbon to be used as the raw materials is usually within the range of from about 35 to about 70 parts by weight, preferably from about 37 to about 55 parts by weight based on about 100 parts by weight of alumina.

The time for mixing depends on the mixing apparatus and the amount of mixing. Therefore, the conditions are decided by preliminary experiment so that uniform agitation can be achieved.

The powdery raw material composed of the alumina and carbon after mixing is dried, if necessary, and calcined in a nitrogen or ammonia atmosphere at a temperature of from about 1400°C to about 1700°C to obtain powdery aluminum nitride.

At a temperature lower than about 1400°C, satisfactory reduction reaction is not achievable, while at a temperature exceeding about 1700°C the particle size becomes larger, and the sintering characteristics deteriorates undesirably.

Since the resulting powdery aluminum nitride contains excess powdery carbon or unreacted powdery carbon, the remaining carbon is eliminated by heating under an oxidizing-gas-containing atmosphere at a temperature of from about 650°C to about 900°C.

The powdery aluminum nitride thus prepared has usually an average secondary particle diameter of about 5 μm or less. The sintered compact prepared by press-molding the aluminum nitride and sintering it at a temperature of 1800°C or higher has usually a sintered density of about 3.25 g/cc or higher and a thermal conductivity of about 200 W/mk or higher.

The powdery aluminum nitride is worked into an IC substrate material by a press method, a doctor-blade method, an extrusion method, or the like. Since the IC substrates have recently become complicated in shape as seen in the trends of introduction of a multi-pin structure such as a pin-grid-array (PGA) type package and the like, the molding composition of aluminum nitride is required to exhibit low degree of shrinkage and to be uniform with less anisotropy (variation in the sintered density).

The powdery aluminum nitride of the present invention is especially suitable for such applications, and gives, by combined use of an organic polymeric compound decomposable at a temperature of 1400°C or lower, a molding aluminum nitride composition having a low degree of shrinkage and being uniform with less anisotropy.

The reason for using the organic polymeric compound decomposable at a temperature of 1400°C or lower is that the binder can be burned off during sintering process usually conducted at a temperature of 1600°C or higher after formation of molded green sheet from the aluminum nitride composition.

The organic polymer compound therefor is not particularly limited, if it is used in the application field and gives substantially no or little decomposition residue. The specific examples include one or more of oxygen-containing organic polymeric substances such as polyvinyl alcohol, methylcellulose, hydroxymethylcellulose, polyethylene oxide, polyvinylbutyral, polymethyl methacrylate, etc.; hydrocarbon resins such as polyethylene, polypropylene, polystyrene, etc.; polyvinyl chloride; acrylic resins and their emulsions, waxes and their emulsions, and the like. The molecular weight of the organic polymeric compounds is not limited specially, but preferably is within the range approximately of from 5000 to 500000 in view of the ease of handling of green sheets, and so forth.

The amount of the binder to be added depends on the kind of the binder, molding conditions such as thickness of a green sheet, properties required for the sintered compact, and the like, and cannot be decided definitely. Usually, it is used in an amount of from about 0.1 to 30 parts by weight, preferably about 2 to 15 parts by weight based on 100 parts of the powdery aluminum nitride.

The aluminum nitride composition of the present invention may optionally contain combinedly a deflocculant, a plasticizer, and the like, which are used in related fields, in addition to the above powdery aluminum nitride and the binder composed of an organic polymeric compound.

The mode of using the aluminum nitride composition may be any known method and is not limited specially. As an example, the aforementioned composition is dispersed in a dispersion medium by a doctor-blade method or the like into a uniform slurry, which is molded to a specific form, such as a sheet form, and subsequently dried and calcined.

5

THE BEST MODE FOR PRACTICING THE INVENTION

The present invention is described in more detail by reference to examples. The present invention is not limited by the examples.

In the present invention, the diameter of the primary particles of powdery aluminum nitride was measured by electron microscope, photograph, while the other particle diameters were measured by centrifugal sedimentation light-transmission. The thermal conductivity was measured by a laser flash method.

In the examples, the "part" is based on weight unless otherwise mentioned.

EXAMPLE 1

100 Parts of powdery alumina having an average primary particle diameter of 0.6 $\mu$m and a purity of 99.7%, and 500 parts of water were mixed, and dispersed by ultrasonic wave for about 30 minutes. Thereto at pH 10.5 kept constant, 12 parts of 50% yttrium nitrate [$Y(NO_3)_3$] solution was added in about 30 minutes to coat the surface of alumina powder with yttrium hydroxide.

After filtration of the resulting slurry, yttrium remaining the filtrate was measured, but was not detected.

The alumina separated by filtration was washed with water, and was subsequently mixed by high speed agitation with 100 parts of water and 45 parts of carbon black having an average secondary particle diameter of about 1.5 $\mu$m and an ash content of 0.02%, based on 100 parts of the alumina.

The resulting mixture was dried at 150°C by a hot-air drier, cooled, and then filled into a graphite vessel, and was subjected to reductive nitriding reaction by heating at 1600°C for 8 hours in a nitrogen atmosphere.

After the reductive nitriding, decarbonization treatment was conducted with air at 780°C for 3 hours.

The powder obtained had an average particle size of 2.8 $\mu$m, a primary particle diameter of 1 $\mu$m or less as observed by electron-microscopy, and an oxygen content of 1.65%. The content of $Y_2O_3$ was 3.2%.

The powdery aluminum nitride thus produced was pressed uniaxially at a pressure of 300 kg/cm$^2$, and rubber-pressed at a pressure of 2000 kg/cm$^2$ to obtain a molded article of $20 \times 40 \times 2$ mm.

This molded article was buried in a 50/50 powder mixture of powdery aluminum nitride and powdery boron nitride, and was sintered at 1800° for 1 hour under a nitrogen stream to obtain an aluminum nitride sintered compact.

The resulting sintered compact had a density of 3.26 g/cc and a thermal conductivity of 235 W/mk.

COMPARATIVE EXAMPLE 1

100 Parts of the same powdery alumina and 45 parts of the same powdery carbon as used in Example 1, and 2.5 parts of powdery $Y_2O_3$ having an average primary particle diameter of 1.5 $\mu$m together with 100 parts of water were mixed by high-speed agitation. The resulting mixture was dried by a hot-air drier, cooled, and, in the same manner as in Example 1, were subjected to reductive nitriding reaction and decarbonization treatment.

The powder obtained had an average particle diameter of 3.1 $\mu$m, a primary particle diameter of 1 $\mu$m or less as observed by electron-microscopy, and an oxygen content of 1.68%. The content of $Y_2O_3$ was 3.1%.

The resulting powdery aluminum nitride was molded and sintered in the same manner as in Example 1 to prepare aluminum nitride sintered compact.

The resulting sintered compact had a density of 3.27 g/cc and a thermal conductivity of 198 W/mk.

COMPARATIVE EXAMPLE 2

100 Parts of alumina having an average primary particle diameter of 0.6 $\mu$m and a purity of 99.7%, and 45 parts of carbon black having an average secondary particle diameter of about 1.5 $\mu$m and an ash content of 0.02%, which were employed in Example 1, were mixed by high-speed agitation.

The resulting mixture was subjected to drying, cooling, reductive nitriding, and decarbonization in the same manner as in Example 1.

The powder obtained had an average particle diameter of 2.5 $\mu$m, a primary particle diameter of 1 $\mu$m or less as observed by electron-microscopy, and an oxygen content of 1.05%.

Separately, yttrium chloride was dissolved in methyl alcohol in an amount of 3.1% in terms of its oxide based on the aluminum nitride, and the aluminum nitride was added thereto and mixed.

This mixture slurry was heated to 60°C, and then in a nitrogen atmosphere at 300°C to prepare coated product.

The resulting powdery aluminum nitride coated with the yttrium compound was sintered to obtain a sintered compact in the same manner as in Example 1.

The sintered compact had a density of 3.09 g/cc, and a thermal conductivity of 175 W/mk.

COMPARATIVE EXAMPLE 3

To 2000 g of aqueous 10% aluminum chloride solution, 45.8 g of 10% $Y(NO_3)_3$ solution was added. The mixture was stirred sufficiently, and neutralized to pH 8 with an aqueous 1N ammonium hydroxide solution. The formed precipitate of the hydroxide was collected by filtration, washed with water sufficiently, dried, and sintered at 1200°C for 2 hours. Subsequently, the oxide was put into a pot mill made by alumina together with alumina balls, and pulverized to obtain alumina-type powder having an average primary particle size of 0.7 $\mu$m. This alumina-type powder had a $Y_2O_3$ content of 2.5% by weight, and a purity of 99.9% excluding the yttrium compound.

The powdery alumina thus prepared and powdery carbon employed in Example 1 were subjected to reductive nitriding and decarbonizing treatment in the same manner as in Example 1 to prepare powdery aluminum nitride.

The powder obtained had an average particle diameter of 2.8 $\mu$m, a primary particle diameter of not more than 1 $\mu$m as observed by electron-microscopy, and an oxygen content of 1.75%. The $Y_2O_3$ content thereof was 3.1%.

The resulting powdery aluminum nitride thus obtained was sintered in the same manner as in Example 1 to prepare a sintered compact of aluminum nitride.

The resulting sintered compact had a density of 3.27 g/cc, and a thermal conductivity of 183 W/mk.

EXAMPLE 2, EXAMPLE 3, COMPARATIVE EXAMPLE 4, and COMPARATIVE EXAMPLE 5

Powdery aluminum nitrides were prepared in the same manner as in Example 1 except that the alumina, a raw material, as shown in Table 1 was used. Further sintered compacts were obtained by using these powdery materials. The properties thereof are shown in Table 1. Separately, as Comparative examples 4 and 5, powdery aluminum nitrides were prepared in the same manner as in Comparative Example 1 except that the same raw materials, alumina, as in Examples 2 and 3 were used. Sintered compacts were prepared from these powdery materials. The results are shown similarly in Table 1.

EXAMPLE 4

100 Parts of powdery alumina having an average primary particle diameter of 0.6 $\mu$m and a purity of 99.7%, and 500 parts of water were mixed, and dispersed by ultrasonic wave for about 30 minutes. Thereto at pH 9.0 kept constant, 12 parts of 50% yttrium nitrate [$Y(NO_3)_3$] solution and 0.7 part of calcium nitrate [$Ca(NO_3)_2$] were added in 30 minutes to coat the surface of alumina powder with yttrium hydroxide and calcium hydroxide.

The alumina separated by filtration was washed with water, and was subsequently mixed by high speed agitation with 100 parts of water and 45 parts of carbon black having an average secondary particle diameter of about 1.5 $\mu$m and an ash content of 0.02%, based on 100 parts of the alumina.

The resulting mixture was dried at 150°C by a hot-air drier, cooled, and then filled into a graphite vessel, and was subjected to reductive nitriding reaction by heating at 1600°C for 8 hours in a nitrogen atmosphere. After the reductive nitriding, decarbonization treatment was conducted with air at 780°C for 3 hours.

The powder obtained had an average particle size of 2.5 $\mu$m, a primary particle diameter of 1 $\mu$m or less as observed by electron-microscopy, and an oxygen content of 1.55%. The content of $Y_2O_3$ was 3.1%, and the content of CaO was 0.05%.

The powdery aluminum nitride thus produced was rubber-pressed at a pressure of 300 kg/cm$^2$ to obtain a molded article of 20 × 40 × 2 mm.

This molded article was buried in a 50/50 powder mixture of powdery aluminum nitride and powdery boron nitride, and was sintered at 1800° for 1 hour under a nitrogen stream to obtain an aluminum nitride sintered compact.

The resulting sintered compact had a density of 3.28 g/cc and a thermal conductivity of 220 W/mk.

7

EXAMPLE 5

To 100 parts of the powdery aluminum nitride obtained in Example 1, 127 parts of a solvent consisting of toluene/ethanol = 6:4 was added, and thereto polyvinylbutyral was added. The mixture was blended by means of a ball mill for about 10 hours.

The deaeration of this mixture was proceeded, and then the viscosity was adjusted to 15000 cp by solvent removal.

The resulting slurry was formed into a sheet shape on a propylene film by means of a doctor-blade type of sheet-forming machine.

Subsequently, the molded article was dried to obtain a sheet of 30 cm in breadth and 0.6 mm in thickness.

From the sheet of 1 m in length, square sheets of 3 cm × 3 cm were cut out by punching at 20 points totally: 5 points in length direction and 4 points in breadth direction. The cut sheets were sintered at 1750°C in nitrogen for 3 hours.

The obtained sintered compacts had an exceedingly uniform sintered density with a variation range of from 3.25 to 3.27 g/cc, and exhibited a degree of shrinkage of 17.2%.

For comparison, sheets were prepared and tested for shrinkage degree and variation in the same manner as in this Example except that the powdery material prepared in Comparative examples 1, 2, and 3 were used. Consequently, the ones made from the powdery material of Comparative Example 1 exhibited the sintered density variation of from 3.03 to 3.21 g/cc and shrinkage degree of 19.1%; the ones of Comparative Examples 2, 3.07 to 3.23 g/cc and shrinkage degree of 20.4%; and the ones of Comparative Example 3, 2.98 to 3.18 g/cc and shrinkage degree of 20.8%.

EXAMPLE 6

The powdery aluminum nitride prepared in Example 1 was disintegrated in a dry method by a ball mill with alumina balls for about 2 hours. After the disintegration, the diameter of the primary particles of the powdery aluminum nitride was about 1 μm as observed by electron microscopy, and the oxygen content was 1.80%.

The powdery aluminum nitride thus prepared was worked into sintered compacts in the same manner as in Example 4.

The sintered density of the resulting sintered compact varied in the range of from 3.26 to 3.28 g/cc and the shrinkage degree thereof was 14.5 %.

USEFULNESS IN INDUSTRY

The powdery aluminum nitride described above in detail of the present invention, although the reason therefor is not clear, has been found to enable production of a sintered compact having excellent thermal conductivity without lowering sintered density, in comparison with the conventional aluminum nitride crystal having a sintering auxiliary dispersed therein, or a mixture of powdery aluminum nitride and a sintering auxiliary. Further the aluminum nitride molding composition for a doctor-blade molding method or the like made from the combination of this material with a binder composed of an organic polymer compound has also been found to enable to provide a molded article exhibiting a low degree of shrinkage and being uniform with low anisotropy. Therefore, the industrial value thereof is great.

Table 1

| | Raw material alumina | | Powdery aluminum nitride | | | | Sintered compact | |
|---|---|---|---|---|---|---|---|---|
| | Particle diameter | Purity | Particle diameter | Primary particle diameter | Oxygen content | Y$_2$O$_3$ content | Density | Thermal conductivity |
| Example 2 | 1.2 μm | 99.9% | 3.3 μm | 1.8 μm | 1.35% | 3.1% | 3.28 g/cc | 215 W/mk |
| Comparative example 4 | " | " | 3.8 | 1.4 | 1.45 | 3.0 | 3.05 | 175 |
| Example 3 | 0.3 | 99.99 | 1.9 | 0.6 | 2.00 | 3.2 | 3.27 | 205 |
| Comparative example 5 | " | " | 1.2 | 0.4 | 2.15 | 3.1 | 3.20 | 180 |

## Claims

1. A process of manufacturing powdery aluminum nitride coated on the surface of the primary particles of agglomerated particles thereof with at least one of oxides, oxynitrides and nitrides of yttrium in an amount of from 0.1% by weight to 10% by weight in terms of metal,

   the process being characterized in that alumina, which has an average primary particle diameter of not more than 5 $\mu$m and is coated with yttrium or an yttrium compound in an amount of 0.1% by weight to 10% by weight in terms of metal based on the aluminum nitride formed by nitriding, is mixed with carbon having an ash content of 0.5% or less and an average secondary particle diameter of not more than 5 $\mu$m, and the mixture is calcined in an atmosphere of nitrogen or ammonia at a temperature of 1400°C to 1700°C.

2. Powdery aluminum nitride, coated on the surface of primary particles thereof constituting agglomerated particles with at least one of oxides, oxynitrides and nitrides of yttrium in an amount of from 0.1% by weight to 10% by weight in terms of metal and produced by the process of Claim 1.

3. Powdery aluminum nitride as claimed in Claim 2, wherein the diameter of the agglomerated particles is not more than 10 $\mu$m.

4. Powdery aluminum nitride as claimed in Claim 3, wherein the diameter of the agglomerated particles is not more than 5 $\mu$m.

5. An aluminum nitride composition comprising 0.1 to 30 parts by weight of a binder composed of an organic polymer compound decomposable at a temperature of 1400°C or lower blended to 100 parts by weight of powdery aluminum nitride as claimed in Claim 2, 3 or 4.

**Patentansprüche**

1. Verfahren zur Herstellung von Aluminiumnitridpulver, das auf der Oberfläche der Primärteilchen von agglomerierten Teilchen mit mindestens einem Oxid, Oxynitrid oder Nitrid von Yttrium in einer Menge von 0,1 bis 10 Gew.-%, angegeben als Metall, beschichtet ist,
wobei das Verfahren dadurch gekennzeichnet ist, daß Aluminiumoxid, das einen durchschnittlichen Teilchendurchmesser der Primärteilchen von nicht mehr als 5 $\mu$m aufweist und mit Yttrium oder einer Yttriumverbindung in einer Menge von 0,1 bis 10 Gew.-%, angegeben als Metall, bezogen auf das durch Nitrieren gebildete Aluminiumnitrid, beschichtet ist, mit Kohlenstoff, der einen Aschegehalt von 0,5 % oder weniger und einen durchschnittlichen Durchmesser der Sekundärteilchen von nicht mehr als 5 $\mu$m aufweist, vermischt wird und das Gemisch in einer Atmosphäre von Stickstoff-oder Ammoniak bei einer Temperatur von 1400-1700°C calciniert wird.

2. Aluminiumnitridpulver, das auf der Oberfläche seiner Primärteilchen, die agglomerierte Teilchen bilden, mit mindestens einem Oxid, Oxynitrid oder Nitrid von Yttrium in einer Menge von 0,1 bis 10 Gew.-%, angegeben als Metall, beschichtet ist und nach dem Verfahren von Anspruch 1 hergestellt worden ist.

3. Aluminiumnitridpulver nach Anspruch 2, wobei der Durchmesser der agglomerierten Teilchen nicht mehr als 10 $\mu$m beträgt.

4. Aluminiumnitridpulver nach Anspruch 3, wobei der Durchmesser der agglomerierten Teilchen nicht mehr als 5 $\mu$m beträgt.

5. Aluminiumnitrid-Zusammensetzung, umfassend 0,1 bis 30 Gewichtsteile eines Bindemittels, das aus einer organischen Polymerverbindung, die bei einer Temperatur von 1400°C oder darunter zersetzbar ist, besteht, im Gemisch mit 100 Gewichtsteilen Aluminiumnitridpulver nach Anspruch 2, 3 oder 4.

**Revendications**

1. Procédé de fabrication de nitrure d'aluminium pulvérulent recouvert sur la surface des particules primaires de ses particules agglomérées d'au moins l'un des oxydes, oxynitrures et nitrures d'yttrium en une quantité de 0,1 % en poids à 10 % en poids en termes de métal, le procédé étant caractérisé en ce que de l'alumine, qui a un diamètre moyen de particules primaires d'au plus 5 $\mu$m et qui est recouverte d'yttrium ou d'un composé d'yttrium en une quantité de 0,1 % en poids à 10 % en poids en termes de métal sur la base du nitrure d'aluminium formé par nitruration, est mélangée avec du carbone ayant une teneur en cendre de 0,5 % ou moins et un diamètre moyen de particules secondaires d'au plus 5 $\mu$m, et le mélange est calciné dans une atmosphère d'azote ou d'ammoniac à une température de 1 400°C à 1 700°C.

10

2.  Nitrure d'aluminium pulvérulent, recouvert sur la surface de ses particules primaires constituant des particules agglomérées d'au moins l'un des oxydes, oxynitrures et nitrures d'yttrium en une quantité de 0,1 % en poids à 10 % en poids en termes de métal et produit par le procédé de la revendication 1.

3.  Nitrure d'aluminium pulvérulent selon la revendication 2, dans lequel le diamètre des particules agglomérées n'est pas supérieur à 10 $\mu$m.

4.  Nitrure d'aluminium pulvérulent selon la revendication 3, dans lequel le diamètre des particules agglomérées n'est pas supérieur à 5 $\mu$m.

5.  Composition de nitrure d'aluminium comprenant 0,1 à 30 parties en poids d'un liant constitué par un composé polymérique organique décomposable à une température de 1 400 °C ou inférieure, mélangées à 100 parties en poids de nitrure d'aluminium pulvérulent selon la revendication 2, 3 ou 4.